# EUROPEAN PATENT APPLICATION

(11) **EP 2 680 409 A2**
(43) Date of publication of application: **01.01.2014**
(21) Application number: 13173466.7
(22) Date of filing: 24.06.2013
(51) Int. Cl.: H02K 7/10

(54) **Motor**

(30) Priority: 28.06.2012 KR 20120069851
(71) Applicant: LG Innotek Co., Ltd., Seoul 100-714 (KR)
(72) Inventor: Chang, Dong Geun, Seoul 100-714 (KR)
(74) Representative: Cabinet Plasseraud

(57) **Abstract**

A motor is provided, the motor including a housing (1), a stator (4) mounted inside the housing, a rotor (5) rotatably installed at a center of the stator by a rotation shaft (3), and a pulley (100) rotating in association with the rotation shaft (3), wherein the pulley (100) includes a belt gear (100) coupled by a belt at a periphery, a flange (120) formed at one side of the belt gear to have a diameter greater than that of the belt gear, and a relief groove (130) formed between the belt gear (110) and the flange (120) to distance the belt gear from the flange.

## Description

### BACKGROUND OF THE DISCLOSURE

### 1. Field of the Disclosure

The present disclosure relates to a brushless motor.

### 2. Discussion of the Related Art

Generally, almost every vehicle employs an electric power-assist steering system. Such an electric power-assist steering system generates an assist force based on the steering torque and the steering angle in order to enhance the steering performance of the vehicle.

That is, a steering system that assists a steering force of a vehicle with a separate power is used to enhance the motion stability of a vehicle.

Conventionally, the auxiliary steering device uses hydraulic pressure, but an Electronic Power Steering (EPS) system adapted to transmit a rotation output of an electric motor to a steering shaft via a speed reduction mechanism has been increasingly employed these days from a viewpoint of a reduction in engine load, a reduction in weight, an enhanced steering stability and a quick restoring force.

The EPS system is configured such that an Electronic Control Unit (ECU) drives a motor in response to steering conditions detected by a speed sensor, a torque angle sensor and a torque sensor to enhance a steering stability and provide a quick restoring force, whereby a driver can safely steer a vehicle.

The EPS system is also such that a motor assists a torque manipulating a steering wheel to allow a driver to steer a vehicle with less power, where the motor employs a Brushless Direct Current (BLDC) motor.

The BLDC motor generally forms an exterior look by coupling of a housing with a cover member, an inner circumferential surface of the housing is provided with a stator, and the stator is centrally formed with a rotor rotatably mounted in electrical interaction with the stator. The rotor is rotatably supported by a rotation shaft, and an upper surface of the rotation shaft is connected by a steering shaft of a vehicle to provide a power assisting the steering of the vehicle as mentioned above.

Meanwhile, the cover member is installed at an inner surface with a PCB (Printed Circuit Board) mounted with a detection sensor provided in a magnetic element, where the detection sensor detects a magnetic force of a sensing magnet rotatably installed with the rotor to learn a current position of the rotor.

Generally, the sensing magnet is fixed to an upper surface of a plate installed at an upper surface of the rotor using an adhesive. The sensing magnet can detect the position of the rotor by being coupled to a rotation shaft by matching the plate to a magnetic field direction, if the sensing magnet is magnetized to the plate.

An output of the EPS motor can reduce a force turning the steering wheel by being transmitted to a steering shaft through a predetermined power transmission unit. At this time, the power transmission unit may variably configured depending on an installed position of the EPS motor, and in order to prevent the noise and vibration of the EPS motor from being well transmitted to a driver, the EPS motor may be installed at a position near to a wheel maximally distanced from the steering wheel. In this case, the power transmission unit of the EPS motor may use a belt pulley system, whereby a belt serpentine movement can be minimized by forming a helically shaped gear surface on a surface contacted by a belt and a pulley.

However, in a case the power transmission unit is formed by a belt pulley system, there may occur an error in the manufacturing process such as burrs and/or edges at a connection portion where a flange member provided at the pulley to prevent the belt from being disengaged and a gear surface formed on a pulley surface, and if the error occurs, a problem may be generated in that belt portion contacting the burrs or edges easily wears.

Another problem is that, in a case the pulley is manufactured using a sintering process, in view of the fact that the pulley is largely manufactured through the sintering process using a metal mold in consideration of durability, the manufacturing cost may increase due to excessively high cost of mold manufacturing, and if a mold is used more than a predetermined number of times, accuracy of the sintered pulley may deteriorate.

### BRIEF SUMMARY

The present disclosure is directed to cope with the abovementioned problems/disadvantages and it is an object of the present disclosure to provide a motor configured to be manufactured at a reasonable cost, and to have a pulley improved in structure for obtainment of belt reliability even if the motor is used for a long time.

In one general aspect of the present disclosure, there is provided a motor, the motor comprising:
a housing;
a stator mounted inside the housing;
a rotor rotatably installed at a center of the stator by a rotation shaft; and
a pulley rotating in association with the rotation shaft, wherein the pulley includes a belt gear coupled by a belt at a periphery, a flange formed at one side of the belt gear to have a diameter greater than that of the belt gear, and a relief groove formed between the belt gear and the flange to distance the belt gear from the flange.

Preferably, but not necessarily, the pulley may be formed in one body.

Preferably, but not necessarily, the pulley may have a belt gear, a flange and a relief groove by cutting a rod material.

Preferably, but not necessarily, the belt gear may be formed by roll forming.

Preferably, but not necessarily, the belt gear may be formed at a periphery with a helically-shaped gear surface.

Preferably, but not necessarily, the flange may be arranged at a position near to the housing.

Preferably, but not necessarily, the flange may have a tapered surface toward the belt gear.

There is an advantageous effect in the motor according to an exemplary embodiment of the present disclosure in that a metal rod material is cut to form a groove between a flange and a pulley gear part, and the pulley gear part is formed by roll forming to form a pulley gear surface, whereby a manufacturing cost can be reduced over that of sintering process and a belt life can be enhanced.

### BRIEF DESCRIPTION OF THE DRAWINGS

FIG.1 is a schematic cross-sectional view illustrating an EPS motor according to an exemplary embodiment of the present disclosure.
FIG.2 is schematic view illustrating an EPS motor according to an exemplary embodiment of the present disclosure.
FIG. 3 is an enlarged view of a flange of a pulley illustrated in FIG.2.

### DETAILED DESCRIPTION

Now, a motor according to the exemplary embodiment of the present disclosure will be described in detail with reference to the accompanying drawings.

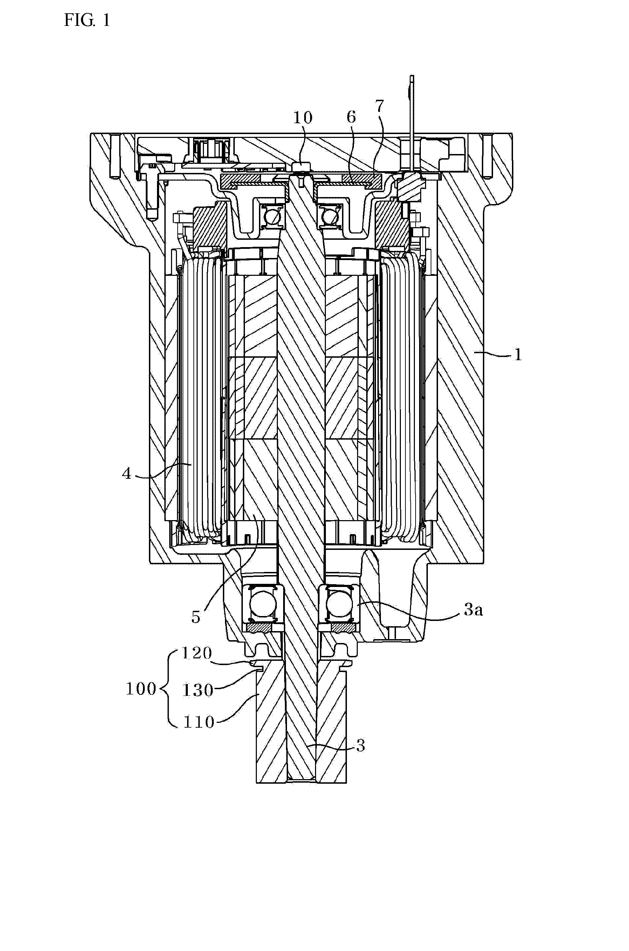

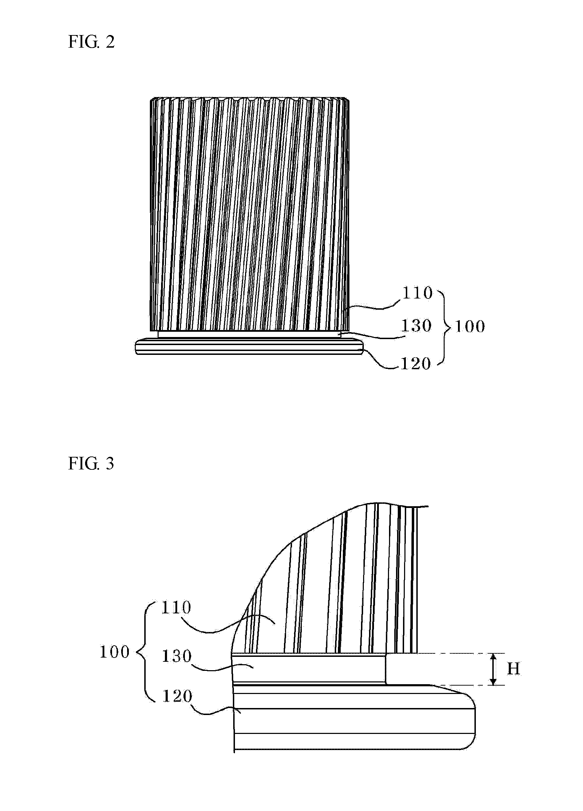

FIG.1 is a schematic cross-sectional view illustrating an EPS motor according to an exemplary embodiment of the present disclosure, FIG.2 is schematic view illustrating an EPS motor according to an exemplary embodiment of the present disclosure, and FIG. 3 is an enlarged view of a flange of a pulley illustrated in FIG.2.

Referring to FIG.1, an EPS motor according to an exemplary embodiment of the present disclosure includes a housing (1) and a cover member (not shown) coupled to an upper surface of the housing (1), and an external look of the motor is constituted by combination of the housing (1) and the cover member.

A fixing bracket is provided at a lateral surface of the housing (10), a stator (4) wound with a plurality of coils is provided at an inner surface of the housing (1) and a rotor (5) is rotatably installed at a center of the stator (4) by a rotation shaft (3). Both ends of the rotation shaft (3) may be rotatably supported by a bearing (3a), and the bearing (3a) may be provided using a standard bearing. The rotor (5) is installed at an upper surface with a sensing magnet (7) coupled to a plate (6) for obtaining position information of the rotor (5).

Referring to FIG.1 again, the plate (6) is provided in a shape of a disc, and may be coupled by the rotation shaft (3) and a holder member (10). The plate (6) is preferably formed with a metal material, and may be provided in an approximate shape of a disc. The plate (6) is coaxially installed with the sensing magnet (7) and may be configured in such a manner that the plate (6) is rotated in association with the rotation of the rotation shaft (3) to make the sensing magnet (7) rotate.

The sensing magnet (7) may be provided with a disc shape having an outermost diameter corresponding to a diameter of the plate (6), and centrally formed with a through hole having a predetermined diameter, and the rotation shaft (3) fixed to the plate (6) can pass therethrough. A main magnet may be provided at a position near to a periphery of the sensing magnet (7) and a sub magnet may be provided at a position near to the through hole. The sensing magnet (7) is mounted at an upper surface with a magnetic element (not shown) such as a Hall IC mounted on a PCB fixed to an inner surface of the cover member, to detect the rotation of the sensing magnet (7).

Meanwhile, the sensing magnet (7) may be configured to wrap at least one surface of the plate (6), and may wrap an entire of the plate (6) as shown in FIG.1. However, it is sufficient enough to form the sensing magnet (7) in one body as there is no need to always form the plate (6) as a core, because a centrifugal force acting to a circumferential direction from a center of a disc-shaped body is greatest in response to motor rotation.

Although the holder member (10) is coupled to an upper surface of the sensing magnet (7) to allow the sensing magnet (7) to maintain a predetermined position at all times, the existence of the holder member (10) is not an essential configuration and may be omitted if necessary. The holder member (10) may be fixedly coupled to the plate (6) using a fixing unit (not shown) such as a fastening screw. The holder member (10) may be formed with an elastic material such as a thin plated metal to be elastically deformed when coupled by the fixing unit, whereby restoring force of the holder member (10) is used to fix the position of the sensing magnet (7).

The characteristic of the present disclosure lies in a pulley (100) coupled to a distal end of the rotation shaft (3). That is, a pulley manufacturing method using a conventional sintering process disadvantageously involved with a high cost and a long sintering time is improved and a pulley is formed with an improved structure by processing a relatively reasonable rod material.

The pulley (100) is rotated in association with rotation of the rotation shaft (3), and may include a belt gear (110), a flange (120) and a relief groove (19). The pulley (100) may be formed in one body.

The belt gear (110) may be provided with a shape corresponding to a gear surface of a belt to allow a periphery to be meshed with the gear surface formed on the belt. Although a shape of tooth on the belt gear (110) may be variably formed, the belt gear (110) may be provided with a helical gear shape to minimize a belt serpentine movement according to the exemplary embodiment of the present disclosure, where the serpentine movement means a phenomenon of the belt moving to direction of the rotation shaft of the pulley that travels the belt when the belt is traveling.

Furthermore, according to the exemplary embodiment of the present disclosure, the gear surface formed on a periphery of the belt gear (110) may be formed by a form rolling process. The form rolling process means a sintering process in which a material is inserted between metal plates and relatively rotated. The form rolling process is largely used for formation of screws or gears. The form rolling process is advantageous in that a processing time is much shorter than the cutting process, and there is no intermittence in metal flow to enable a product to be manufactured with an excellent strength.

The flange (120) is provided to guide the travel of the belt coupled to the belt gear (110) and to prevent the belt from being disengaged from the belt gear (110), and may be formed with a diameter greater than that of the belt gear (110)**.** Furthermore, a surface opposite to the belt of the flange (120) may be formed with a tapered surface (121) to minimize a belt damage even if there is generated an interference with the belt.

Meanwhile, according to the exemplary embodiment of the present disclosure, the flange (120) may be formed only one side of the belt gear (110). This is because only one surface of the belt is moving in a case the belt gear (110) is provided in a helical shape and a rotation direction of the rotation shaft is constant. Although an arrangement position of the flange (120) may be changed according to rotation direction of the rotation shaft and shape of the belt gear (110), the flange (120) may be arranged at a position near to the housing (1) of the motor as illustrated in FIGS.1 to 3. At this time, the flange (120) and the housing (1) may be spaced apart at a predetermined distance to prevent interference therebetween.

The relief groove (130) may be formed between the flange (120) and the belt gear (110), where the flange (120) is distanced from the belt gear (110) at a predetermined width (H) as shown in FIG.3. The relief groove (130) is provided to prevent a deformed portion from being pushed up to the flange (120) side, where the deformed portion is generated during plastic deformation of the pressed gear surface when the gear surface of the belt gear (110) is form-rolled, and to prevent a connection portion such as a slant surface between the flange (120) and the belt gear (110) from being deformed.

In a case the relief groove (130) is formed between the flange (120) and the belt gear (110), the flange (120) is spaced apart from the belt gear (110) at a predetermined distance (H) as shown in FIG.3, whereby, even if a portion is protruded to both distal ends while a surface of the belt gear (110) is deformed during form-rolling process, the protruded deformed portion is prevented from interfering with the flange (120).

Meanwhile, the pulley (100) thus configured according to the exemplary embodiment of the present disclosure can be manufactured with a relatively low cost over that of a sintering process using a mold, because the pulley (100) thus configured according to the exemplary embodiment of the present disclosure needs no sintering method requiring a mold, but forms a gear surface of the belt gear (110) through form rolling process after cutting off the belt gear (110), the flange (120) and the relief groove (130) by processing a steel rod material.

Particularly, although a manufacturing cost disadvantageously increases due to an increased mold cost as defect rate increases during the sintering process, and as a complicated mold must be manufactured to form the relief groove (130) using the sintering process, the manufacturing cost and product defect rate can be advantageously reduced if the pulley is formed using the cutting process of rod material and form rolling process.

Furthermore, another advantage is that, in a case the physical properties of the pulley (100) is to be replaced, the properties can be easily changed by simple replacement of steel rod material as the pulley (100) is formed using a single rod material.

Still further advantage is that the flange (120) and the belt gear (110) are spaced apart across the relief groove (130) to minimize the frictional wear of the belt by the flange (120) and to prolong the life of belt.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims.

## Claims

1. A motor including a housing (1), a stator (4) mounted inside the housing, a rotor (5) rotatably installed at a center of the stator by a rotation shaft (3, and a pulley (100) rotating in association with the rotation shaft (3), the motor **characterized by** the pulley (100) further including a belt gear (110) coupled by a belt at a periphery, a flange (120) formed at one side of the belt gear to have a diameter greater than that of the belt gear, and a relief groove (130) formed between the belt gear (110) and the flange (120) to distance the belt gear from the flange.

2. The motor of claim 1, **characterized in that** the pulley (100) is formed in one body.

3. The motor of claim 1, **characterized in that** the pulley (100) have a belt gear (110), a flange (120) and a relief groove (130) by cutting a rod material.

4. The motor of claim 1, **characterized in that** the belt gear (110) is formed by roll forming.

5. The motor of claim 1, **characterized in that** the belt gear (110) is formed at a periphery with a helically-shaped gear surface.

6. The motor of claim 1, **characterized in that** the flange (120) is arranged at a position near to the housing (1).

7. The motor of claim 6, **characterized in that** the flange (120) is formed with a tapered surface toward the belt gear (110).
